# EUROPEAN PATENT SPECIFICATION

(11) **EP 1 507 822 B1**
(45) Date of publication and mention of the grant of the patent: **11.04.2007**
(21) Application number: 03732661.8
(22) Date of filing: 27.05.2003
(51) Int. Cl.: C08K 5/00, C08L 23/12, C08K 5/13, C08K 5/524, C08K 5/3435

(54) **STABILISED POLYPROPYLENE**
STABILISIERTES POLYPROPYLEN
POLYPROPYLENE STABILISE

(30) Priority: 27.05.2002 GB 0212136; 24.12.2002 GB 0230108
(43) Date of publication of application: 23.02.2005
(73) Proprietor: Great Lakes Chemical (Europe) GmbH, 8500 Frauenfeld (CH)
(72) Inventor: DE LA CRUZ, Monica, E-20012 San Sebstian (ES); DOUMEN, Cindy, Nancy, B-3200 Aarschot (BE); KECK-ANTOINE, Klaus, Helmut, B-1090 Jette-Bruxelles (BE); JOHNSON, Brian, William, B-2280 Grobbendonk (BE)
(74) Representative: Spott, Gottfried
(86) International application number: PCT/GB2003/002279
(87) International publication number: WO 2003/099918

(56) References cited:
- EP-A- 0 934 972
- WO-A-01/16224
- WO-A-96/16115
- FR-A- 1 268 942
- GB-A- 1 078 772
- US-A- 6 051 671
- PATENT ABSTRACTS OF JAPAN vol. 014, no. 299 (C-0733), 27 June 1990 (1990-06-27) & JP 02 097543 A (NIPPON SYNTHETIC CHEM IND CO LTD:THE), 10 April 1990 (1990-04-10)

## Description

This invention relates to stabilised polypropylene compositions, more particularly but not exclusively to stabilised polypropylene fibres.

Polypropylene (PP) fibres have a wide field of application including geo/agro textiles, curtains, diapers, medical clothing, tissues, large bags and nets.

All these applications need the PP to be stabilised in order to survive severe extrusion and spinning processes, which are usually performed at temperatures between 245°C and 300°C. Process stabilisation is usually obtained by the addition to the PP of stabiliser mixtures of phenolic antioxidants and phosphite antioxidants. Sometimes, also, stability of the PP fibres to light is required and when this is the case, UV stabilisers are added, for example hindered amines. These UV stabilisers sometimes also are necessary for LTHA requirement.

The properties to be maintained in PP fibres are:
- viscosity (measured as MFI - Melt Flow Index).
- colour during processing (measured as YI - Yellowness Index).
- colour during exposure to NOₓ gases (gas fading) which are usually formed domestically by the combustion of propane and butane.

The required properties are generally provided by phenolic antioxidants, which preserve the PP from degradation during processing, in combination with phosphites which are known to enhance the effectiveness of the phenolic antioxidants by heterolytic decomposition of hydroperoxides formed into the polymer at high temperature and in the presence of air (oxygen). This enhancement of phenolic antioxidant effectiveness by phosphites is known as "synergistic effect".

Even though phenolic antioxidants offer good process stabilisation of PP, most phenolic antioxidants exhibit the disadvantage of yellowing (YI) due to their oxidation to coloured quinones by air or NOₓ gases.

Only a limited number of phenolic antioxidants offer an acceptable balance of all the required properties, such as for example Lowinox 1790 - 1,3,5-tris(4-tert-butyl-3-hydroxy-2,6 dimethylbenzyl)-1,3,5-triazine-2,4,6-(1H,3H,SH)-trione; Irganox 1425 - calcium diethylbis (CC3,5-bis(1,1-dimethylethyl)-4-hydroxyphenyl) methyl) phosphonate), Anox IC-14 (1,3,5 - tris (3,5-di-t-butyl-4-hydroxybenzyl) isocyanurate) and Anox 20 Tetrakismethylene (3,5-di-t-butyl-4-hydroxyhydrocinnamate) methane.

All of these acceptable phenolic antioxidants are used at quite a high level of concentration, ranging from 500 to 1500 ppm and in combination with phosphites at ratios from 1:1 to 1:4 (phenol:phosphite).

EP-A-0934972 claims a general formulation of phenolics, phosphites and hindered amines for a specific application, i.e. the prevention of calendered polyolefin articles from sticking to hot roll surfaces. The range of concentrations described for the antioxidants is very wide. All the Examples in the specification use high levels of both phenolic and phosphite antioxidants. The lowest concentration in the Examples is where the phenolic antioxidant is 800ppm and the phosphite is 1000ppm.

GB-A-1078772 is focussed on rubber and polyethylene although there are passing references to other substrates. Phenol/phosphite blends are described as having ratios between 10/90 and 30/70. The stabilisers are added to the polymers at concentrations between 0.1 and 5%, preferably 0.7 and 2.5%, so the particularly effective phenolic antioxidant concentration would be 30% of 0.7% (i.e. 2100ppm). The Examples are all on rubber (nothing on polyolefins). Also, in the Examples the phenolic antioxidant is always at a ratio > 1 with phosphite.

US-A-6051671 is directed to the specific application of "containers up to 75 gallons made of polyolefins" and it claims that phenols and phosphites each have to be present at less than 750ppm but no specific blend of antioxidants is exemplified.

FR-A-1268-942 relates to the stabilisation of polypropylene against discolouration. The essential feature of the invention is the inclusion of an organic polysulphide in the polymer and at least one stabiliser which can be a phosphite and/or a phenol. It is apparent from the Examples that the combination of phenol and phosphite is not an essential feature of the invention and the phenol or phosphite can be used on its own along with the essential polysulphide.

JP02 097543A relates to an ethylene/vinyl acetate copolymer stabilised with a mixture of an alkali metal secondary or tertiary phosphate; a substituted phenol and an organophosphite. The phenol and phosphite each are present over a very wide range of 0.001 to 5 wt%.

WO 01/16224A covers polycarbonate stabiliser formulations containing inter alia blends of phenol and phosphite stabilisers.

WO 96/16115A is directed to a process for producing a polyethylene which has good adhesion to a substrate after extrusion. The inventive feature lies is including 25 to 5000ppm of a phosphite antioxidant. It is apparent from the Examples that the inclusion of a phenolic antioxidant is not an essential feature of the invention.

Quite recently there has appeared on the market some "phenol free" formulations where the phenolic components have been substituted by a benzofuranone or a dialkylhydroxylamine. Even though these new systems offer some advantages over the old systems, they still show some disadvantages. For example, PP used in fibre spinning must have a low viscosity and because the PP coming out from the polymerisation reactors has a MFI between 2 and 12, it is necessary to "degrade" the PP during extrusion by breaking the long polymeric chains to shorter chains and this is achieved by introduction of special peroxides during extrusion. The PP obtained is called "controlled rheology PP" or "cracked PP". It is only in very few cases that the necessary MFI is obtained directly from polymerisation and does not require the use of peroxides.

However, consumption of the aforementioned expensive peroxides depends on the nature and concentration of the stabilising system. It is well known that some phenolic antioxidants and some phosphites give a high level of peroxide decomposition with a clear impact on the cost of fibre manufacture and on byproduct accumulation into the polymer which worsens the organoleptic properties of the same. Unfortunately, also, benzofuranones and dialkylhydroxylamines react with peroxides, destroying a portion of them and give rise, as in the case of hydroxylamines, to coloured byproducts.

This means that none of the stabilising systems currently on the market, even though some of them are very expensive, are able to satisfy all the requirements of fibre manufacturers simultaneously. In some cases, a good MFI is accompanied by a very bad colour. In some other cases, high consumption of peroxides for "cracked PP" is obtained, or "gas fading" properties are very poor. Fibre manufacturers, therefore, are obliged to select and use different formulations with regard to the most important properties required for the final PP application, whereas their preference would be to have just one formulation valid for all applications they might want

In addition to all the above considerations, it has to be borne in mind that in some PP fibre applications, e.g. diapers and clothing, the fibres come into contact with human skin. It is well known that extractability of stabilisers from plastics depends on the chemical nature of the stabilisers and from their concentration (gradient effect). The higher the concentration of the stabiliser, the higher is the probability of stabilisers being absorbed through the skin. It follows that decreasing the overall concentration of stabilisers in the PP fibres offers a very positive impact on health and also on cost

We have surprisingly found that particular PP stabiliser formulations with very low phenolic concentration can provide very good processing stabilisation (MFI), very low discolouration (YI) and very low gas fading, similar to or better than the performance obtained by the above mentioned "phenol free" systems and with the advantage of low interference with peroxides used in controlled rheology applications.

According to the present invention, there is provided a polypropylene composition which comprises:
(A) polypropylene and
(B) a stabiliser formulation consisting essentially of :
   (a) a first stabilising component consisting of 50 to 100 ppm based on the weight of the polypropylene of a phenolic antioxidant or a mixture of phenolic antioxidants;
   (b) a second stabilising component consisting of 500 to 1000 ppm based on the weight of the polypropylene of a phosphite antioxidant or a mixture of phosphite antioxidants; and optionally
   (c) a third stabilising component consisting of 100 ppm to 5000 ppm based on the weight of the polypropylene of a hindered amine light stabiliser or a mixture of such stabilisers,
wherein the ratio of phenolic antioxidant to the phosphite antioxidant is in the range of 1:10 to 1:20 by weight.

The polypropylene composition comprises 100 to 50ppm of the phenolic antioxidant or mixture of phenolic antioxidants.

In a preferred embodiment of the invention the polypropylene composition is in the form of polypropylene fibres.

The phenolic antioxidant preferably is a less hindered phenol, i.e. a phenol which has some steric hindrance, but not at the high level of steric hindrance of the more common antioxidants based on 2,6-di-t butylphenol.

Further preferably, the hindered phenol antioxidant is selected from at least one of 1,3,5-tris (4-tert-butyl-3-hydroxy-2,6dimethylbenzyl)-1 ,3,5-triazine-2,4,6-(1R3H,5H) -trione (Lowinox 1790); 2,2'-methylenebis(6-t-butyl-4-methylphenol) (Lowinox 22 M46); 4,4'-butylidenebis (2-t-butyl-5-methylphenol) (Lowinox 44B25); 2,2'-isobutylidenebis(4,6-dimethylphenol) (Lowinox 22IB46); and 1,1,3-tris(2'-methyl-4'-hydroxy-5'-t-butylphenyl)butane (Lowinox CA22); 2,5-Di-t-amylhydroquinone (Lowinox AH25); 2,2'-Methylene-bis(4-methyl-6-(1-methyl cyclohexyl) phenol (Lowinox WSP); 4,4'-Thiobis (2-t-butyl-5-methylphenol) Lowinox TBM6; 2,2'-Thiobis (6-t-butyl-4-methyl phenol) Lowinox TBP6; and Triethylene glycol bis [3-(3-t-butyl-4-hydroxy-5-methylphenyl) propionate] (Lowinox GP45).

The phosphite antioxidant preferably is selected from at least one of tris(2,4-di-t-butylphenyl)phosphite (Alkanox 240), bis(2,4-di-t-butylphenyl)pentaerythritol diphosphite (Alkanox P-24); and tetrakis (2,4-di-butylphenyl)-4,4'biphenylene diphosphonite (Alkanox 24-44), and bis (2,4-dicumylphenyl) pentaerythritol diphosphite (Doverphos S-9228).

The hindered amine light stabiliser preferably is selected from at least one of dimethyl succinate polymer with 4-hydroxy-2,2,6,6-tetramethyl-1-piperidine ethanol (Lowilite 62); poly((6-((1,1,3,3-tetramethylbutyl)amino)-s-triazine-2,4diyl)(2,2,6,6-tetramethyl-4-piperidyl)imino) hexamethylene (2,2,6,6-tetramethyl-4-piperidyl)imino))) (Lowilite 94); and N^{I}, N^{II}, N^{III}, N^{IV} -tetrakis (2,4-bis(N-1,2,2,6,6-pentamethyl-4-piperidyl)-n-butylamino)-1,3,5-triazin-6-yl)-4,7-diazadecane-1,10-diamine (Chimassorb 119).

The preferred ratio of phenolic antioxidant to phosphite antioxidant in the polypropylene composition is in the range 1:9 to 1:20 by weight.

The present invention is also a process for stabilising a polypropylene composition which comprises incorporating in said polypropylene composition at least one mixture comprising a component (a), a component (b) and optionally a component (c) such that the amounts of (a), (b) and (c) as defined above are complied with.

From another aspect, the present invention is also the use of a stabilising formulation comprising at least one mixture of a component (a), a component (b) and optionally a component (c) in the amounts as defined above for stabilising a polypropylene composition.
From yet another aspect, the present invention is also a stabilising formulation for polypropylene compositions comprising at least one mixture of a component (a), a component (b) and optionally a component (c) as defined above.

The prior art teaches that up to a certain level, the greater the concentration of phenolic antioxidant the better the MFI performance whereas the present invention teaches that very good MFI performance can be obtained at very low levels of phenolic antioxidant.

Furthermore, the prior art teaches that the optimum ratio for phenol antioxidant to phosphite antioxidant is within the range of 1:1 to 1:4 by weight. The present invention however shows that a ratio of phenolic antioxidant to phosphite antioxidant of 1:9 to 1:20 by weight gives beneficial advantages from health, environment and cost aspects.

The two and three component blends of the present invention provide stabiliser packages which give unexpectedly good results in polypropylene fibre applications. The stabiliser blends of the invention offer unique improved performance over current state of the art stabilising systems and offer similar to better processing stability, better to similar colour stability, better gas fading performance and on top of this lower interaction with peroxides in controlled rheology grades. This combination of properties is highly desired for high-end polypropylene fibre applications. FiberPlus, Lowinox, Alkanox, Anox, Lowilite and NDB are trade marks of Great Lakes Chemical Corporation.

Fiberstab, Irgastab, Irganox and Chimassorb are trade marks of Ciba Geigy.

Doverphos is a trademark of Dover Chemical Corporation.

Genox is a trade mark GE Speciality Chemicals.

Embodiments of the invention will now be described, simply by way of example.

### General description of the preparation of the stabiliser blends of the invention in polypropylene powder.

### A) Mixing of the additives

Mixing of the additives, which can be phenolic antioxidants, phosphite antioxidants, hindered amine antioxidants, acid scavengers, peroxides and others, with the polypropylene powder is done as described below and depends highly on the physical form of the stabilisers. The additives can be used in powder form, liquid form and in No Dust Blend (NDB) form.

### 1. Additives in powder form:

50% of the polypropylene powder is weighed into a plastic bag, the powder additives are weighed separately and added to the polypropylene powder in the bag. The remaining polypropylene powder is then added and the bag is blown up with nitrogen and shaken for at least 2 minutes in different directions.

### 2. Additives in liquid form:

The peroxide used is a liquid. As described in paragraph 1 above, 50% of the polypropylene powder is weighed into a plastic bag, then a small amount of the polypropylene (which is subtracted from the total polypropylene amount) is then weighed in an aluminium pan. To this pan with polypropylene powder, the correct amount of peroxide is added via a pipette and mixed with the polypropylene powder with a spatula for about 10 minutes (or until a homogeneous powder mixture is formed). The content of the aluminium pan is then added to the polypropylene powder in the plastic bag, the remaining polypropylene powder is added and the bag is blown up with nitrogen and shaken for at least 2 minutes in different directions.

### 3. Additives in NDB form:

NDB blends are a preblend of additives without polymer carrier made according to US Patent No 5240642 and European Patent Application No 514784. Similar blends are available from alternative suppliers which are referred to as 'one packs'.

When the additives are in this specific physical form, the NDB or 'one-pack' is first powderised again by means of a mortar and pestle. To mix the additives with the polypropylene powder the method as described in paragraph 1 above can be followed.

### B) Processing of the additive/ polypropylene powder mixture

After 2 minutes shaking of the plastic bag, the mixture is poured into the hopper of a Brabender single screw extruder (Compression ratio 3:1, L/D 25, Dscrew 19 mm, screw speed 60 rpm).

When cracking of the initial melt flow is desired, the mixture is first extruded using the following settings on the Brabender single screw extruder:
- Temperature profile: 200-215-235-250°C
- 1 extrusion pass under nitrogen blanket

When no cracking is desired, no peroxide is added to the system but the mixture is extruded on the Brabender single screw extruder using the above mentioned settings. Strands are collected and pelletised This first extrusion pass is referred to as the compounding pass or pass zero.

In order to evaluate the performance of different additive formulations, the compound after pass zero, is extruded on the Brabender single screw extruder using the following settings:
- Temperature profile: 200-225-250-275°c
- 5 extrusion passes in open air.

After each extrusion pass the strands are caught up and pelletised. Pellets are collected after the 1^{st}, 3^{rd} and 5^{th} extrusion pass for further measurements (colour measurements, melt flow measurements) whereas anti gas fading resistance is measured on fibers.

### C) Testing of the performance of different formulations

Measuring the Yellowing Index (YI) on pellets, which are collected after the 1st, 3rd and 5th extrusion pass determines the colour stability of a formulation. Yellowing index is measured according to standard ASTM E313.

Measuring the melt flow (MFI) on pellets, again collected after the 1^{st}, 3^{rd} and 5^{th} extrusion pass determines the processing stability of a formulation. The melt flow is measured according to standard ISO 1133.

Gas fading resistance is measured on film or fibre samples and measures the yellowing of a formulation in the presence of NOx gases. Gas fading resistance is an important property for polypropylene fibre applications. During storage the fibres are often exposed to NOx gases and given the high surface to volume ratio of polypropylene fibres especially fine denier fibres are sensitive to this discolouration phenomena. Gas fading resistance is tested by measuring Delta E according to AATCC method 23.

In the following Examples, stabiliser formulations/systems are identified as follows:
FiberPlus NC is a two component formulation of the invention - [1:10] Lowinox 1790/Alkanox 240.

FiberPlus LT is a three component formulation of the invention [1:10] - Lowinox 1790/Alkanox 240 + Lowilite 62.

FiberPlus LL is a three component formulation of the invention - 7% Lowinox 1790 + 70% Alkanox 240 + 23% Lowilite 62.

FiberPlus HL is a three component formulation of the invention - 6.5% Lowinox 1790 + 65% Alkanox 240 + 28.5% Lowilite 94.

Fiberplus BW is a three component formulation of the invention - 7% Lowinox 1790 + 70% Alkanox 240 + 23% Lowilite 94.

Irganox B501W and Anox IC-14/Alkanox 240 systems are examples of state of the art phenol containing systems.

Fiberstab L112, Irgastab FS 410, Irgastab FS 210 and Genox EP/Chimassorb 944 systems are examples of state of the art "phenol free" systems.

### Example 1

Example 1 relates to formulations of the invention in Spheripol PP resin.
Mixing, processing and testing of the formulations are carried out as in the general description set forth above.
Loads are in ppm.
Extrusion is carried out at 240-275-300°C.

Table 1 below shows two and three component formulations of the invention and state of the art formulations in non-cracked polypropylene.

Table 2 below shows two and three component formulations of the invention and state of the art formulations in cracked polypropylene.

Results of testing are summarised in Tables 3 to 7 below.

**Table 1**

| Non-Cracked PP | | | | | | |
|---|---|---|---|---|---|---|
| **System** | **FiberPlus NC** | **FiberPlus LT** | **Irganox B501W** | **Fiberstab L112** | **IC14/Alk 240** | **Fiberstab 410** |
| Load level | 990 | 1290 | 2000 | 1200 | 1500 | 1200 |
| Formulation | A | B | C | D | E | F |
| CaSt - Faci S | 600 | 600 | 600 | 600 | 600 | 600 |
| | | | | | | |
| Alk 240 | 900 | 900 | 1000 | | 1000 | |
| Alk P-24 | | | | | | |
| Anox 20 | | | | | | |
| Anox IC14 | | | | | 500 | |
| Lowinox 1790 | 90 | 90 | | | | |
| Irganox 1425WL | | | 1000 | | | |
| Fiberstab L112 | | | | 1200 | | |
| Fiberstab 410 | | | | | | 1200 |
| Lowilite 62 | | 300 | | | | |

**Table 2**

| Cracked PP | | | | | |
|---|---|---|---|---|---|
| **System** | **Irganox B501W** | **FiberPlus NC** | **FiberPlus LT** | **IC14/Alk 240** | **FiberStab 410** |
| Load level | 2000 | 660 | 960 | 900 | 750 |
| Formulation | G | H | I | L | M |
| CaSt - Faci S | 500 | 500 | 500 | 500 | 500 |
| Alk 240 | 1000 | 600 | 600 | 600 | |
| Alk P-24 | | | | | |
| Anox 20 | | | | | |
| Anox IC14 | | | | 300 | |
| Lowinox 1790 | | 60 | 60 | | |
| Irganox 1425WL | 1000 | | | | |
| Fiberstab 410 | | | | | 750 |
| Lowilite 62 | | | 300 | | |

**Table 3**

| **Repeated extrusions at 240°C:MFI & YI MFI and YI are the average values of several measurements.** | | | | | | |
|---|---|---|---|---|---|---|
| "Non cracked PP" | | | | | | |
| | **1st** | | **3^{rd}** | | **5th** | |
| **Formulation** | **MFI** | **YI** | **MFI** | **YI** | **MFI** | **YI** |
| **A** | 10.71 | -2.48 | 11.19 | -2.57 | 11.11 | -2.06 |
| **B** | 10.96 | -2.51 | 11.39 | -1.86 | 11.23 | -1.31 |
| **C** | 11.96 | -2.17 | 12.53 | -1.42 | 13.13 | -0.73 |
| **D** | 12.21 | -3.24 | 12.94 | -1.54 | 13.99 | -0.79 |
| **E** | 10.66 | -2.57 | 11.51 | -1.55 | 11.78 | -0.19 |
| **F** | 11.35 | -2.07 | 12.86 | -0.77 | 14.32 | 0.24 |

| "Cracked PP" | | | | | | |
|---|---|---|---|---|---|---|
| | **1st** | | **3^{rd}** | | **5th** | |
| **Formulation** | **MFI** | **YI** | **MFI** | **YI** | **MFI** | **YI** |
| **G** | 19.17 | -2.63 | 19.96 | -2.08 | 20.36 | -1.77 |
| **H** | 17.75 | -2.14 | 18.66 | -1.37 | 20.01 | -0.41 |
| **I** | 16.67 | -1.99 | 17.62 | -1.64 | 18.76 | -0.63 |
| **L** | 16.95 | -1.43 | 17.91 | 0.03 | 19.41 | 1.39 |
| **M** | 17.6 | -1.93 | 19.69 | -1.45 | 21.26 | -1.04 |

Both in "cracked" and "non cracked" PP formulations of the invention H and I show the best MFI and comparable YI vs the "traditional" (G) and "state of the art" (L,M,) formulations.

**Table 4**

| **Repeated extrusions at 275°C: MFI & YI MFI and YI are the average values of several measurements +** | | | | | | |
|---|---|---|---|---|---|---|
| "Non cracked PP" | | | | | | |
| | **1st** | | **3rd** | | **5th** | |
| **Formulation** | **MFI** | **YI** | **MFI** | **YI** | **MFI** | **YI** |
| **A** | 11.26 | -2.18 | 12.29 | -0.62 | 13.06 | 0.86 |
| **B** | 11.48 | -2.24 | 12.31 | -0.63 | 13.41 | 0.72 |
| **C** | 12.68 | -2.71 | 13.87 | -2.05 | 15.03 | -0.89 |
| **D** | 11.75 | -2.01 | 12.74 | -1.14 | 13.79 | -0.41 |
| **E** | 11.53 | -2.15 | 12.15 | -1.25 | 13.08 | 0.37 |
| **F** | 11.68 | -1.54 | 13.81 | -0.06 | 16.31 | 1.23 |

| "Non cracked PP" | | | | | | |
|---|---|---|---|---|---|---|
| | **1st** | | **3^{rd}** | | **5th** | |
| **Formulation** | **MFI** | **YI** | **MFI** | **YI** | **MFI** | **YI** |
| **G** | 20.18 | -2.18 | 21.51 | -1.29 | 22.76 | -0.42 |
| **H** | 18.52 | -2.08 | 20.22 | -1.41 | 22.55 | -0.69 |
| **I** | 17.73 | -1.78 | 19.62 | -1.52 | 21.69 | -0.88 |
| **L** | 17.78 | -1.2 | 19.43 | 0.15 | 21.64 | 1.29 |
| **M** | 18.21 | -2.02 | 20.13 | -1.01 | 22.21 | 0.15 |

Formulations of the invention H and I show the best YI and a comparable MFI vs "traditional" (G) and "state of the art" (L,M) formulations.

**Table 5**

| **Repeated extrusions at 300°C : MFI & YI MFI and YI are the average values of several measurements** | | | | | | |
|---|---|---|---|---|---|---|
| "Non cracked PP" | | | | | | |
| | **1^{st}** | | **3^{rd}** | | **5th** | |
| **Formulation** | **MFI** | **YI** | **MFI** | **YI** | **MFI** | **YI** |
| **A** | 12.09 | -2.39 | 15.11 | -1.88 | 19.87 | -1.41 |
| **B** | 11.76 | -2.18 | 14.53 | -0.74 | 17.57 | 0.81 |
| **C** | 13.64 | -2.76 | 17.17 | -2.05 | 20.18 | -1.41 |
| **D** | 12.82 | -1.43 | 14.44 | -0.44 | 16.27 | 0.62 |
| **E** | 12.54 | -1.73 | 14.78 | -0.37 | 17.82 | 0.71 |
| **F** | 12.02 | -0.82 | 15.05 | 1.27 | 20.79 | 2.66 |

Formulations of the invention,A and B, show good MFI and good YI: A is similar to C for YI and better for MFI, whereas B is similar to E for both MFI and YI; F is the worst for both MFI and YI

| "Cracked PP" | | | | | | |
|---|---|---|---|---|---|---|
| | **1^{st}** | | **3^{rd}** | | **5th** | |
| **Formulation** | **MFI** | **YI** | **MFI** | **YI** | **MFI** | **YI** |
| **G** | 21.42 | -1.79 | 24.51 | -1.24 | 27.13 | -0.38 |
| **H** | 19.95 | -1.87 | 24.72 | -1.34 | 29.92 | -0.43 |
| **1** | 18.91 | -1.66 | 23.33 | -0.81 | 28.68 | -0.15 |
| **L** | 18.91 | -0.52 | 23.61 | 0.68 | 28.32 | 1.73 |
| **M** | 18.85 | -1.44 | 22.23 | 0.19 | 26.61 | 1.75 |

Formulation of the invention (I) shows a good MFI at the 5th extrusion, similar to "state of the art" L but much better in YI; both H and I are better than L and M both for MFI and YI

**Table 6**

| **Colour measurement** | | | | | | | |
|---|---|---|---|---|---|---|---|
| **Equipment: Macbeth Colour Eye 3000** **Reflection** **Standard: ASTM E 313** **Light source: I D65** **Specimen: PP fibers** **Test: gasfading (as Delta E)** | | | | | | | |
| "Non Cracked PP" | | | | | | | |
| **Formulation** | | | | | | | |
| **Time(h)** | **Cycles** | **A** | **B** | **C** | **D** | **E** | **F** |
| | 0 | 0 | 0 | 0 | 0 | 0 | 0 |
| 20 | 1 | 0.57 | 0.43 | 2.55 | 0.55 | 0.69 | 0.42 |
| 43 | 2 | 0.66 | 0.49 | 4.21 | 0.67 | 0.74 | 0.48 |
| 65.5 | 3 | 0.73 | 0.58 | 5.46 | 0.91 | 1.51 | 0.64 |
| 86.5 | 4 | 0.83 | 0.65 | 6.25 | 1.01 | 1.82 | 0.87 |
| 107.5 | 5 | 0.83 | 0.65 | 6.73 | 1.08 | 1.98 | 0.86 |
| 128.5 | 6 | 0.85 | 0.71 | 7.12 | 1.13 | 2.18 | 0.96 |

Formulations of the invention A and B show the best values for gasfading vs both "traditional" (C,E) and "state of the art" (D,F) formulations.

| "Cracked PP" | | | | | | |
|---|---|---|---|---|---|---|
| **Formulation** | | | | | | |
| **Time(h)** | **Cycles** | **G** | **H** | **I** | **L** | **M** |
| | 0 | 0 | 0 | 0 | 0 | 0 |
| 20 | 1 | 1.35 | 0.25 | 0.19 | 0.27 | 0.14 |
| 43 | 2 | 2.66 | 0.38 | 0.23 | 0.35 | 0.19 |
| 65.5 | 3 | 3.77 | 0.47 | 0.29 | 0.58 | 0.29 |
| 86.5 | 4 | 4.41 | 0.53 | 0.34 | 0.81 | 0.34 |
| 107.5 | 5 | 4.81 | 0.53 | 0.38 | 0.85 | 0.47 |
| 128.5 | 6 | 5.21 | 0.55 | 0.39 | 0.99 | 0.48 |

Formulations of the invention, H and I, are the best, together with formulation M which however is one of the worst for YI during extrusion (see Table 5).

**Table 7**

| **Peroxide Consumption** | |
|---|---|
| (Peroxide necessary (in ppm) to crack PP) from MFI 2.05 to MFI 18) | |
| **Formulation** | **Ppm** |
| G | 450 |
| H | 426 |
| I | 406 |
| L | 406 |
| M | 472 |

Formulation M, considered to be the "state of the art" for PP fibers, shows the highest peroxide consumption.

The above results confirm that the exemplified formulations of the invention show, both in "non cracked" and "cracked" Spheripol PP, the best balance among the performances required in PP fibers when compared with both the older and newer stabilizing systems, providing in this way to the users a single formulation satisfying the requirements of all their end applications in addition to giving cost savings.

### Example 2

Example 2 relates to FiberPlus formulations of the invention in other types of PP resins.

Tables 8 and 9 below show data and test results for FiberPlus NC and the "phenol free" system Irgastab FS410 in cracked PP (EI Paso/Rexene technology, MFI 30).

**Table 8**

| | **NC** | **FS410** |
|---|---|---|
| **Alk 240** | 600 | |
| **Low 1790** | 60 | |
| **FS410** | | 800 |
| **Acid Scavenger** | 650 | 650 |

**Table 9**

| **Formulation** | **NC** | **FS410** |
|---|---|---|
| **MFI** | | |
| **Pass1** | 33.44 | 34.24 |
| **Pass 5** | 51.27 | 47.39 |
| **YI** | | |
| **Pass 1** | 0.66 | 1.13 |
| **Pass 5** | 4.57 | 3.98 |
| **Gasfading** | 0.388 | 0.459 |
| **DE 6 cycles** | | |
| **Peroxide** | 375 | 445 |
| **consumption** | | |

FiberPlus NC shows lower peroxides consumption, better gasfading and comparable YI when tested against the Irgastab FS 410 "phenol free" system.

Table 10 below shows data of FiberPlus systems and state of the art systems in non-cracked BP/Amoco Slurry PP and Table 11 shows the results of testing these systems.
- Resin:: non-cracked PP, BP/Amoco Slurry technology, MFI 12
- Test:: Multipass extrusion at 275°C measuring MFI and Y1 on pellets.

**Table 10**

| | **FiberPlus system** | | | **State of the Art System** | | | |
|---|---|---|---|---|---|---|---|
| | **LL** | **HL** | **BW** | **FS L 112** | **FS 410** | **Genox EP/944** | **B501W** |
| **CaSt** | 250 | 250 | 250 | 250 | 250 | 250 | 250 |
| **Alk 240** | 900 | 900 | 900 | | | | |
| **Low 1790** | 90 | 90 | 90 | | | | |
| **LL 62** | 300 | | | | | | |
| **LL 94** | | 600 | 300 | | | 600 | |
| **Genox EP** | | | | | | 600 | |
| **FS 410** | | | | | 1200 | | |
| **FS L 112** | | | | 1200 | | | |
| **B501W** | | | | | | | 2000 |

**Table 11**

| | | | | | | | |
|---|---|---|---|---|---|---|---|
| **MFI** | | | | | | | |
| **Pass 1** | 12.57 | 13.04 | 12.93 | 12.91 | 13.58 | 13.28 | 13.62 |
| **Pass 5** | 15.06 | 15.98 | 15.99 | 15.05 | 17.71 | 16.85 | 15.87 |
| **YI** | | | | | | | |
| **Pass 1** | -1.764 | -1.857 | -2.083 | -1.819 | -0.924 | -1.297 | -1.775 |
| **Pass 5** | 0.678 | 1.107 | 0.286 | -0.101 | 1.293 | 1.087 | 0.967 |

The data in Table 11 shows that FiberPlus systems have similar MFI to state of the art systems. Also, each FiberPlus system is able to match the colour of its comparable state of the art system.

Table 12 below shows data of FiberPlus systems and state of the art systems in cracked BP/Amoco Slurry PP and Table 13 shows the results of testings these systems.
Resin: cracked PP BP/Amoco Slurry technology, MFI 12. cracking from 2 to 28-29 with Trigonox 101 as free-radical source.

**Table 12**

| | FiberPlus system | | | State of the Art Systems | | | |
|---|---|---|---|---|---|---|---|
| | LL | HL | BW | FS L 112 | FS 410 | Genox EP/944 | B501W |
| CaSt | 250 | 250 | 250 | 250 | 250 | 250 | 250 |
| Alk 240 | 600 | 600 | 600 | | | | |
| Low 1790 | 60 | 60 | 60 | | | | |
| LL 62 | 300 | | | | | | |
| LL 94 | | 400 | 300 | | | 400 | |
| Genox EP | | | | | | 400 | |
| FS 410 | | | | | 800 | | |
| FS L 112 | | | | 1200 | | | |
| B501 W | | | | | | | 2000 |

**Table 13**

| | | | | | | | |
|---|---|---|---|---|---|---|---|
| Peroxide | | | | | | | |
| Consumption [ppm] | 640 | 640 | 640 | 855 | 710 | 690 | 655 |
| MFI | | | | | | | |
| Pass 1 | 29.99 | 30.38 | 29.75 | 29.1 | 28.89 | 30.82 | 30.57 |
| Pass 5 | 36.05 | 35.74 | 34.68 | 32.57 | 36.9 | 36.44 | 33.49 |
| YI | | | | | | | |
| Pass 1 | -2.070 | -1.832 | -2.079 | -2.099 | -1.769 | -2.020 | -1.882 |
| Pass 5 | -0.489 | -0.258 | -0.165 | -0.579 | -0.325 | -0.049 | 0.402 |

The data in Table 13 shows that FiberPlus systems offer the following advantages against state of the art systems.
(a) lower peroxide consumption and thus lower peroxide interaction than state of the art "phenol free" systems.
(b) processing performance for each FiberPlus system which matches the processing performance of its comparable state of the art systems.

### Example 3

Example 3 relates to experiments (i) using a phosphite alone and (ii) using a different phosphite from that used in Examples 1 and 2.

The experiment where Alkanox 240 is replaced by Alkanox P-24 is to show that different phosphites can be used in the stabiliser formulations of the invention.

The systems were tested at 1000ppm in non-cracked PP(Spheripol technology, MFI 12) and were tested against 1000ppm [1:2] Anox 20/Alkanox 240 as reference.

The data is summarised in Tables 14 and 15 below.

**Table 14**

| | **1790/P-24** | **240** | **20/240** |
|---|---|---|---|
| **CaSt** | 500 | 500 | 500 |
| **Low 1790** | 100 | | |
| **Alk 240** | | 1000 | 500 |
| **Anox 20** | | | 500 |
| **AlkP-24** | 900 | | |

**Table 15**

| | **1790/P-24** | **240** | **20/240** |
|---|---|---|---|
| **MFI** | | | |
| **Pass 1** | 11.1 | 13.7 | 12.6 |
| **Pass 5** | 12.2 | 21.0 | 16.3 |
| **YI** | | | |
| **Pass 1** | -1.72 | -2.07 | -0.58 |
| **Pass 5** | 5.35 | 1.3 | 7.87 |

The results show that Lowinox 1790/Alkanox P-24 of the invention, compared against state of the art Alkanox 240/Anox 20, exhibits better MFI and YI. The results also show how the addition of a small quantity of Lowinox 1790 improves MFI when compared with Alkanox 240 alone.

### Example 4

Example 4 relates to experiments using different low hindered AO's with Alkanox 240 system.

The purpose of the experiments is to show that other low hindered phenols can be used in stabiliser formulations of the invention.

**Table 16**

| | | | |
|---|---|---|---|
| **CaSt** | 500 | 500 | 500 |
| **Lowinox CA22** | | 10 | 100 |
| **Low 1790** | 90 | 90 | |
| **Alk 240** | 900 | 900 | 900 |

**Table 17**

| | **1790/240** | **1790/240/CA22** | **CA22/240** |
|---|---|---|---|
| **MFI** | | | |
| **Pass 1** | 12.51 | 12.32 | 12.95 |
| **Pass 5** | 15.03 | 13.93 | 16.58 |
| **YI** | | | |
| **Pass 1** | 3.97 | 4.71 | 4.39 |
| **Pass 5** | 23.32 | 20.94 | 20.97 |

The results of Table 17 show in column 3 that adding Lowinox CA22 in small amounts to Alkanox 240 provides similar results as adding Lowinox 1790 to Alkanox 240 (column 1) for MFI and YI but column 2 shows that MFI is better still when a blend of Lowinox CA22/Lowinox 1790 is used in a ratio of 1:9. Two "low hindrance" phenols therefore show unexpected synergy.

### Example 5

Example 5 relates to experiments with variable amounts of HALS.

The purpose of the experiments is to check the performance of FiberPlus systems with increased HALS level against state of the art systems.
Resin: Non-cracked PP (BP/Amoco Slurry, MFI 12)
Tests: MPE measuring MFI (ISO 1133) and YI/ASTME313) on pellets Gasfading on films [AATCC method 23] UV test on films [SAEFJ1885]

**Table 18**

| | **FiberPlus NC + 250-2000 ppm LL62** | | | | |
|---|---|---|---|---|---|
| **CaSt** | 250 | 250 | 250 | 250 | 250 |
| **Low 1790** | 90 | 90 | 90 | 90 | 90 |
| **Alk 240** | 900 | 900 | 900 | 900 | 900 |
| **LL 62** | 250 | 500 | 1000 | 1500 | 2000 |
| **LL 94** | | | | | |
| **Chim 119** | | | | | |

**Table 19**

| | | | | | |
|---|---|---|---|---|---|
| **MFI** | | | | | |
| **Pass 1** | 12.57 | 12.52 | 12.42 | 12.42 | 12.42 |
| **Pass 5** | 15.06 | 14.5 | 14.91 | 14.76 | 14.46 |
| **YI** | | | | | |
| **Pass 1** | -1.764 | -2.003 | -1.997 | -1.790 | -1.597 |
| **Pass 5** | 0.678 | 0.941 | 0.536 | 1.030 | 1.163 |
| **Gasfading** | | | | | |
| **6 cycles** | | | | | |
| **YI** | 2 | 2 | 2 | 2 | 2 |
| **Gray scale** | 5 | 4-5 | 5 | 5 | 5 |

**Table 20**

| | **FiberPlus NC + 250-2000 ppm LL94** | | | | |
|---|---|---|---|---|---|
| **CaSt** | 250 | 250 | 250 | 250 | 250 |
| **Low 1790** | 90 | 90 | 90 | 90 | 90 |
| **Alk 240** | 900 | 900 | 900 | 900 | 900 |
| **LL 62** | | | | | |
| **LL 94** | 250 | 500 | 1000 | 1500 | 2000 |
| **Chim 119** | | | | | |

**Table 21**

| | | | | | |
|---|---|---|---|---|---|
| **MFI** | | | | | |
| **Pass 1** | 12.73 | 12.89 | 12.97 | 12.92 | 12.81 |
| **Pass 5** | 14.98 | 15.22 | 15.18 | 15.55 | 15.83 |
| **YI** | | | | | |
| **Pass 1** | -1.771 | -1.904 | -1.544 | -1.650 | -1.363 |
| **Pass 5** | 0.494 | 0.884 | 1.686 | -0.176 | 2.335 |
| **Gasfading** | | | | | |
| **6 cycles** | | | | | |
| **YI** | 2 | 2.1 | 2.1 | 2.1 | 2.2 |
| **Gray scale** | 4-5 | 5 | 5 | 4-5 | 4-5 |
| **UV (tensile properties) SAEJ 1885** | | | | | |
| **E50** | 22 | 28 | 45 | 49 | NM |

**Table 22**

| | **FiberPlus NC + 250-2000 ppm Chim 119** | | | | |
|---|---|---|---|---|---|
| **CaSt** | 250 | 250 | 250 | 250 | 250 |
| **Low 1790** | 90 | 90 | 90 | 90 | 90 |
| **Alk 240** | 900 | 900 | 900 | 900 | 900 |
| **LL 62** | | | | | |
| **LL 94** | | | | | |
| **Chim 119** | 250 | 500 | 1000 | 1500 | 2000 |

**Table 23**

| | | | | | |
|---|---|---|---|---|---|
| **MFI** | | | | | |
| **Pass 1** | 12.58 | 12.78 | 12.86 | 13 | 12.83 |
| **Pass 5** | 14.54 | 14.88 | 15.77 | 15.69 | 15.71 |
| **YI** | | | | | |
| **Pass 1** | -1.737 | -1.653 | -1.550 | -1.551 | -1.549 |
| **Pass 5** | 0.828 | 0.774 | 1.345 | 1.733 | 1.902 |
| **Gasfading** | | | | | |
| **6 cycles** | | | | | |
| **YI** | 2.5 | 2.1 | 2.5 | 2.1 | 2.1 |
| **Gray Scale** | 4-5 | 5 | 4-5 | 5 | 5 |
| **UV (tensile properties)** | | | | | |
| **SAEJ 1885 E50** | 28 | 32 | 37 | 81 | 78 |

### Example 6

Example 6 relates to using Anox 20 and a HALS at higher concentrations.

Anox 20/Lowilite 94 synergy generated at 1000ppm in non-cracked PP (BP/Amoco Slurry technology)

Resin: BP/Amoco Slurry PP, non-cracked, MFI 12.

Test: Multiple pass extrusion measuring MFI and YI on pellets.

**Table 24**

| | **FiberPlus** | | **Anox 20** | | | | | | |
|---|---|---|---|---|---|---|---|---|---|
| | **HL** | **BW** | | | | | | | |
| **CaSt** | 250 | 250 | 250 | 250 | 250 | 250 | 250 | 250 | 250 |
| **Anox 20** | | | 1000 | 800 | 600 | 400 | 200 | 0 | 500 |
| **LL 94** | 600 | 300 | | 200 | 400 | 600 | 800 | 1000 | |
| **Low 1790** | 90 | 90 | | | | | | | |
| **Alk 240** | 900 | 900 | | | | | | | 500 |

**Table 25**

| | | | | | | | | | |
|---|---|---|---|---|---|---|---|---|---|
| **MFI** | | | | | | | | | |
| **Pass 1** | 13.04 | 12.93 | 15.30 | 17.03 | 17.69 | 18.79 | 21.41 | 26.16 | 13.53 |
| **Pass 5** | 15.98 | 15.99 | 21.66 | 26.89 | 28.71 | 30.85 | 38.75 | 64.34 | 18.10 |
| **YI** | | | | | | | | | |
| **Pass 1** | -1.857 | -2.083 | -0.762 | -1.395 | -1.380 | -1.590 | -1.664 | -2.066 | -2.581 |
| **Pass 5** | 1.107 | 0.286 | 3.150 | 2.001 | 1.335 | 2.016 | 0.686 | -0.942 | 0.196 |

Observations from the results of Examples 5 and 6:
(a) FiberPlus NC does not suffer from the increase of HALS concentration as shown in the Tables, e.g. when increasing the amount of Lowilite 62 from 250 to 2000 ppm the MFI remains good, YI increases just a little bit and gas fading remains at the same level. The same applies to other HALS, e.g. Lowilite 94 and Chimassorb 119.
(b) The results show how good are the average performances of FiberPlus NC when compared to a "state of the art" phenol/phosphite blend, e.g. Anox 20/Alkanox 240 where the increase of HALS concentration and reduction of Anox 20 significantly worsens with insignificant improvements in YI.
(c) Increase of HALS concentration increases the tensile strength of FiberPlus NC.

## Claims

1. A polypropylene composition which comprises:
(A) polypropylene and
(B) a stabiliser formulation consisting essentially of:
(a) a first stabilising component consisting of 50 to 100 ppm based on the weight of the polypropylene of a phenolic antioxidant or a mixture of phenolic antioxidants;
(b) a second stabilising component consisting of 500 to 1000 ppm based on the weight of the polypropylene of a phosphite antioxidant or a mixture of phosphite antioxidants; and optionally
(c) a third stabilising component consisting of 100 ppm to 5000 ppm based on the weight of the polypropylene of a hindered amine light stabiliser or a mixture of such stabilisers,
wherein the ratio of phenolic antioxidant to the phosphite antioxidant is in the range of 1:10 to 1:20 by weight.

2. A polypropylene composition as claimed in claim 1 wherein the composition is in the form of polypropylene fibres.

3. A polypropylene composition as claimed in any one of the preceding claims wherein the phenolic antioxidant is a hindered phenol antioxidant.

4. A polypropylene composition according to any one of the preceding claims wherein the phenolic antioxidant is selected from at least one of 1,3,5-tris (4-tert-butyl -3 -hydroxy-2,6 dimethylbenzyl) -1,3,5 -triazine-2,4,6 -(1H,3H,5H)-trione; 2,2'-methylenebis(6-t-butyl-4-methyl phenol); 4,4'-butylidenebis(2-t-butyl-5-methyl phenol); 2,2'-isobutylidenebis(4,6-dimethyl phenol); 1,1,3-tris (2'-methyl-4'-hydroxy-5'-t-butyl phenyl) butane; 2,5-Di-t-amylhydroquinone; 2,2'-Methylenebis [4-methyl-6-(1-methylcyclohexyl) phenol; 4,4'-Thiobis (2-t-butyl-5-methylpbenol); 2,2'-Thiobis (6-t-butyl-4-methylphenol) and Triethylene glycol bis (3-(3-t-butyl-4-hydroxy-5-methylphenyl) propionate.

5. A polypropylene composition as claimed in any one of the preceding claims wherein the phosphite antioxidant is selected from at least one of tris(2,4-di-t-butylphenyl)phosphite, bis(2,4-di-t-butylphenyl)pentaerythritol diphosphite; and tetrakis (2,4-di-butylphenyl)-4,4`biphenylene diphosphonite and bis(2,4-dicumyIphenyl)pentaerythritol diphosphite.

6. A polypropylene composition as claimed in any one of the preceding claims wherein the hindered amine light stabiliser is selected from at least one of dimethyl succinate polymer with 4-hydroxy-2,2,6,6-tetramethyl-1-piperidine ethanol; poly((6-((1,1,3,3-tetramethylbutyl)amino)-s-triazine-2,4diyl)(2,2,6,6-tetramethyl -4-piperidyl) imino) hexamethylene (2,2,6,6 -tetramethyl -4-piperidyl)imino))); and N^{I}, N^{II}, N^{III}, N^{IV}-tetrakis (2,4-bis(N-1,2,2,6,6-pentamethyl-4-piperidyl)-n-butylamino) -1,3,5-triazin-6-yl) -4,7-diazadecane-1,10-diamine.

7. A process for stabilising a polypropylene composition which comprises incorporating in the polyolefin composition at least one mixture consisting essentially of a component (a), a component (b) and optionally a component (c) all according to claim 1.

8. Use of a formulation consisting essentially of at least one mixture of a component (a), a component (b) and optionally a component (c) all according to claim 1 for stabilising a polypropylene composition.

9. A stabilising formulation for polypropylene compositions consisting essentially of at least one mixture of a component (a), a component (b) and optionally a component

## Patentansprüche

1. Polypropylenzusammensetzung, die umfasst:
(A) Polypropylen und
(B) eine Stabilisatorformulierung, bestehend im Wesentlichen aus:
(a) einer ersten stabilisierenden Komponente, bestehend aus 50 bis 100 ppm, bezogen auf das Gewicht des Polypropylens, eines phenolischen Antioxidationsmittels oder eines Gemischs von phenolischen Antioxidationsmitteln;
(b) einer zweite stabilisierenden Komponente, bestehend aus 500 bis 1000 ppm, bezogen auf das Gewicht des Polypropylens, eines Phosphit-Antioxidationsmittels oder eines Gemischs von Phosphit-Antioxidationsmitteln; und gegebenenfalls
(c) einer dritten stabilisierenden Komponente, bestehend aus 100 ppm bis 5000 ppm, bezogen auf das Gewicht des Polypropylens, eines gehinderten Aminlichtstabilisiermittels oder eines Gemischs solcher Stabilisiermittel,
wobei das Verhältnis des phenolischen Antioxidationsmittels zu dem Phosphit-Antioxidationsmittel in dem Bereich von 1:10 bis 1:20 nach Gewicht liegt.

2. Polypropylenzusammensetzung, wie in Anspruch 1 beansprucht, wobei die Zusammensetzung in der Form von Polypropylenfasern vorliegt.

3. Polypropylenzusammensetzung wie in einem der vorstehenden Ansprüche beansprucht, wobei das phenolische Antioxidationsmittel für ein gehindertes Phenol-Antioxidationsmittel steht.

4. Polypropylenzusammensetzung nach einem beliebigen der vorstehenden Ansprüche, wobei das phenolische Antioxidationsmittel ausgewählt ist aus mindestens einem von 1,3,5-Tris(4-tert.-butyl-3-hydroxy-2,6-dimethylbenzyl)-1,3,5-triazin-2,4,6-(1H,3H,5H)-trion; 2,2'-Methylenbis(6-tert.-butyl-4-methylphenol); 4,4'-Butylidenbis(2-tert.-butyl-5-methylphenol); 2,2'-Isobutylidenbis(4,6-dimethylphenol); 1,1,3-Tris(2'-methyl-4'-hydroxy-5'-tert.-butylphenyl)butan; 2,5-Di-tert.-amylhydrochinon; 2,2'-Methylenbis[4-methyl-6-(1-methylcyclohexyl)phenol; 4,4'-Thiobis(2-tert.-butyl-5-methylphenol); 2,2'-Thiobis(6-tert.-butyl-4-methylphenol) und Triethylenglykol-bis(3-(3-tert.-butyl-4-hydroxy-5-methylphenyl)propionat.

5. Polypropylenzusammensetzung wie in einem beliebigen der vorstehenden Ansprüche beansprucht,
wobei das Phosphit-Antioxidationsmittel ausgewählt ist aus mindestens einem von Tris(2,4-di-tert.-butylphenyl)phosphit, Bis(2,4-di-tert.-butylphenyl)pentaerythritdiphosphit; und Tetrakis(2,4-di-butylphenyl)-4,4'-biphenylendiphosphonit und Bis(2,4-dicumylphenyl)pentaerythritdiphosphit.

6. Polypropylenzusammensetzung wie in einem beliebigen der vorstehenden Ansprüche beansprucht,
wobei das gehinderte Aminlichtstabilisiermittel ausgewählt ist aus mindestens einem von Dimethylsuccinatpolymer mit 4-Hydroxy-2,2,6,6-tetramethyl-1-piperidinethanol; Poly((6-((1,1,3,3-tetramethylbutyl)amino)-s-triazin-2,4-diyl)(2,2,6,6-tetramethyl-4-piperidyl)imino)hexamethylen(2,2,6,6-tetramethyl-4-piperidyl)imino))); und N^{I},N^{II},N^{III},N^{IV}-Tetrakis(2,4-bis(N-1,2,2,6,6-pentamethyl-4-piperidyl)-n-butylamino)-1,3,5-triazin-6-yl)-4,7-diazadecan-1,10-diamin.

7. Verfahren zur Stabilisierung einer Polypropylenzusammensetzung, das umfasst ein Einverleiben von mindestens einem Gemisch, bestehend im Wesentlichen aus einer Komponente (a), einer Komponente (b) und gegebenenfalls einer Komponente (c) alle nach Anspruch 1 in die Polyolefinzusammensetzung.

8. Verwendung einer Formulierung, bestehend im Wesentlichen aus mindestens einem Gemisch aus einer Komponente (a), einer Komponente (b) und gegebenenfalls einer Komponente (c) alle nach Anspruch 1 zur Stabilisierung einer Polypropylenzusammensetzung.

9. Stabilisierende Formulierung für Polypropylenzusammensetzungen, bestehend im Wesentlichen aus mindestens einem Gemisch aus einer Komponente (a), einer Komponente (b) und gegebenenfalls einer Komponente (c) alle nach Anspruch 1.

## Revendications

1. Composition de polypropylène qui comprend :
(A) du polypropylène et
(B) une formulation de stabilisant consistant sensiblement en :
(a) un premier composant stabilisant consistant en 50 à 100 ppm sur la base du poids du polypropylène d'un antioxydant phénolique ou d'un mélange d'antioxydants phénoliques ;
(b) un deuxième composant stabilisant consistant en 500 à 1 000 ppm sur la base du poids du polypropylène d'un antioxydant de type phosphite ou d'un mélange d'antioxydants de type phosphite ; et facultativement
(c) un troisième composant stabilisant consistant en 100 ppm à 5 000 ppm sur la base du poids du polypropylène d'un stabilisant à la lumière aminé encombré ou d'un mélange de tels stabilisants,
dans laquelle le rapport de l'antioxydant phénolique à l'antioxydant de type phosphite se trouve dans la plage de 1/10 à 1/20 en poids.

2. Composition de polypropylène selon la revendication 1
dans laquelle la composition a la forme de fibres de polypropylène.

3. Composition de polypropylène selon l'une quelconque des revendications précédentes dans laquelle 1'antioxydant phénolique est un antioxydant phénolique encombré.

4. Composition de polypropylène selon l'une quelconque des revendications précédentes dans laquelle l'antioxydant phénolique est choisi dans le groupe comprenant au moins un parmi la 1,3,5-tris(4-tert-butyl-3-hydroxy-2,6-diméthylbenzyl)-1,3,5-triazine-2,4,6-(1H, 3H,5H)-trione ; le 2,2'-méthylènebis(6-t-butyl-4-méthylphénol) ; le 4,4'-butylidènebis(2-t-butyl-5-méthyl phénol) ; le 2,2'-isobutylidènebis(4,6-diméthylphénol) ; le 1,1,3-tris(2'-méthyl-4'-hydroxy-5'-t-butyl phényl) butane ; la 2,5-Di-t-amylhydroquinone ; le 2,2'-méthylènebis[4-méthyl-6-(1-méthylcyclohexyl) phénol ; le 4,4'-thiobis(2-t-butyl-5-méthylphénol) ; le 2,2'-thiobis(6-t-butyl-4-méthylphénol) et le triéthylèneglycol bis[3-(3-t-butyl-4-hydroxy-5-méthylphényl) propionate.

5. Composition de polypropylène selon l'une quelconque des revendications précédentes dans laquelle l'antioxydant de type phosphite est choisi dans le groupe comprenant au moins un parmi le tris(2,4-di-t-butylphényl)phosphite, le bis(2,4-di-t-butylphényl) pentaérythritol diphosphite ; et le tétrakis (2,4-dibutylphényl)-4,4`-biphénylène diphosphonite et le bis(2,4-dicumylphényl)pentaérythritol diphosphite.

6. Composition de polypropylène selon l'une quelconque des revendications précédentes dans laquelle le stabilisant à la lumière aminé encombré est choisi dans le groupe comprenant au moins un parmi un polymère de diméthylsuccinate avec du 4-hydroxy-2,2,6,6-tétraméthyl-1-pipéridine éthanol ; du poly((6-((1,1,3,3-tétraméthylbutyl)amino)-s-triazine-2,4-diyl) (2,2,6,6-tétraméthyl-4-pipéridyl)imino) hexaméthylène (2,2,6,6-tétraméthyl-4-pipéridyl)imino))) ; et de la N^{I}, N^{II}, N^{III}, N^{IV}-tétrakis (2,4-bis (N-1,2,2,6,6-pentaméthyl-4-pipéridyl)-n-butylamino)-1,3,5-triazin-6-yl)-4,7-diazadécane-1,10-diamine.

7. Procédé pour stabiliser une composition de polypropylène qui comprend l'incorporation dans la composition polyoléfinique d'au moins un mélange consistant sensiblement en un composant (a), un composant (b) et facultativement un composant (c), tous selon la revendication 1.

8. Utilisation d'une formulation consistant sensiblement en un mélange d'un composant (a), d'un composant (b) et facultativement d'un composant (c), tous selon la revendication 1 pour stabiliser une composition de polypropylène.

9. Formulation de stabilisation destinée à des compositions de polypropylène consistant sensiblement en au moins un mélange d'un composant (a), d'un composant (b) et facultativement d'un composant (c), tous selon la revendication 1.
